# EUROPEAN PATENT APPLICATION

(11) **EP 3 644 249 A1**
(43) Date of publication of application: **29.04.2020**
(21) Application number: 18202873.8
(22) Date of filing: 26.10.2018
(51) Int. Cl.: G06Q 10/08

(54) **REAL TIME TRACKING SYSTEM AND METHODS BASED ON WIRELESS OPTICAL COMMUNICATION AND OPTICAL TAGGANTS**

(71) Applicant: Komainu Inc., Wilmington, DE 19806 (US)
(72) Inventor: NIEVES GRANADOS, Nuria, 3911 TK Rhenen (NL); GARCÍA MARTÍN, Julio Manuel, 3911 TK Rhenen (NL)
(74) Representative: Ungria López, Javier

(57) **Abstract**

The present invention relates to an indoor/outdoor Real-Time Tracking System (RTTS) based on wireless optical communication technology that is able to detect the identification, Localization, Communication, and Traceability (ILCT) of things and/or people.

It comprises a wireless optical communication system operating through the infrared light spectrum, in an unconfined medium of any shape, size, and composition, characterized in that it contains, in one side, an ILCT transmitter/reader infrastructure of LEDs and photoreceptors able to send and receive infrared radiations in a variable and configurable wavelength. In the other side, a wireless optical smart taggant that can be incorporated in/onto labels, documents and objects, and can emit to ILCT reader an infrared radiation with the information enclosed into de taggant at a wavelength greater than the incident infrared radiation from ILCT transmitter.

In addition, the invention provides a platform PaaS and methods to allow developers to build a new RTTS.

## Description

### FIELD OF THE INVENTION

The present invention relates generally to indoor/outdoor tracking systems and more particularly to systems and methods for the Identification, Localization, Communication, and Traceability (ILCT) of things and/or people using wireless optical communication technology and optical taggants.

### BACKGROUND OF THE INVENTION

Location determination systems, such as the global positioning system (GPS), have provided the ability to find and track the location of objects and people, enabling the definition of new business models and applications based on location-based services (LBS).

Although fairly accurate outdoors, many location determination systems cannot detect when an object device is indoors, accurately track objects indoors, or determine if an object device is in a vehicle or conveyance. It is desirable to detect or track object devices indoors for applications such as safety, e-business, gaming, directions, or the like.

Solutions proposed for locating object indoors involving beacons, transponders, power lines and more. However, in general, these systems require the installation of a plurality of devices or indoor base stations in order to work and require complicated additional hardware in the object.

RTLS (Real-time locating systems) are a type of local positioning system that allows tracking and identifying the location of objects in real time. Using simple, inexpensive badges or tags attached to the objects by way of communication technologies (Wi-Fi, ZigBee, UWB, RFID and Bluetooth, etc.) "readers" of RTLS receive wireless signals from these tags to determine their locations.

Depending on the communication technology used, real time location systems (RTLS) must include a plurality of methods for calculating distances and positions according to the characteristics of wireless signals. For example, if we are using any radio frequency technology, the RTLS should be able to provide the angle of arrival (AOA) method, the time of arrival (TOA) method, the time difference of arrival (TDOA) method, the triangulation method and the received signal strength (RSS) method.

The RTLS serves in operational areas for logistics and other services, as for example stock grounds or storehouses, and for servicing areas in clinics and industrial plants. Tasks done by an RTLS include, for example, to combine identity and location of any type of items or objects, to combine identity of items with location of filter placing the items, to ensure permanent availability of proper information about temporary placement, to Support notification of placing of items, to prove proper manning of operational areas, to prove consequent evacuation of endangered areas, and to make marshalling staff dispensable.

The RTLS has a plurality of tag devices. Each tag device has a universally unique identification code (UUID). Each tag device will transmit a location signal when activated. A plurality of location receivers are installed in a fixed location. The location receivers will receive the location signal and calculate a location of the tag device transmitting the location signal. A signal mechanism is coupled to an I/O port of each tag device. The location mechanism provides at least one of an audible signal or visual signal when activated. A location reader is provided. The location reader receives the location data transmitted by the plurality of location receivers to enable a person to locate the tag device transmitting the location signal.

In case of measuring a position of a mobile object using the RTLS, a fixed object is required that may be a base for position determination, and a wireless LAN (Local Area Network) AP (Access Point) may be used as the base for the position determination.

Although an accurate position tracking may be possible by densely installing the wireless LAN APs that serve as base for position determination, the densely installation of the wireless LAN APS is disadvantageous in terms of cost, installation and management sides, such that it is problematic to accurately determine positions in a wide outdoor space using the RTLS. Another problem in the RTLS tag device is that a battery must be periodically charged or replaced because the RTLS tag device is generally supplied with a driving power using the battery.

There are many industries in which it is desirable to track people or objects, for example: automotive, aerospace, military, health, underwater communication, sales & retail, marketing and localized advertising, transport, tourism, education, Disaster management, etc.

Below, we describe several scenarios for different vertical markets, where the existence of an RTLS system supports the development of new business solutions.

### Building occupant tracking

Nowadays, the concept of "Smart Building" technologies is rapidly becoming the norm in both new constructions and in a nmodernization of legacy buildings. It has been estimated that in the United States alone, almost $300 billion worth of building efficiency investment would produce savings in excess of $1 trillion in operating expenses. The savings are primarily in energy (climate control), electricity usage (lighting) and water usage. Layered on top of this is the need in many buildings for enhanced security and safety systems, which systems may add significant expense.

Various companies have been working on providing Indoor Position System ("IPS") solutions for the past two decades with varying degrees of accuracy, cost and reliability. Some companies use active Radio Frequency Identification (RFID) tags that occupants wear to determine when an occupant passes an RFID reader (receiver). The accuracy of this approach is limited to the number of receivers available through the building, which is often cost limited. For secure environments where radio frequency emissions are restricted to prevent unauthorized information access and possibly data manipulation, RFID approaches are not practical.

Other companies rely on the use of mobile phones for IPS. There are several ways that this can be accomplished, such as the use of Wi-Fi access points and Bluetooth technology, both of which falls under the class of Distributed Antenna Systems (DAS) that involves the measurement of signal strength or power levels of radio signals to calculate the distance from anchor objects.

Lately, companies such as Apple, Google are popularizing a particular approach called Bluetooth Beaconing, which utilizes the Bluetooth Low Energy standard. The density and quantity of Bluetooth beacons and Wi-Fi access points are critical to the accuracy of this approach. and as such serves as its major limitation.

Other non-RF based techniques, such as passive infrared and acoustic occupancy sensing are also available on the market, but these approaches are only suitable for zone/room occupancy detection and not the fidelity and discrimination required for occupant tracking.

However, the previous proposals are nothing but improved versions of the IPS solutions that has proved unable to obtain a precise system that offers both quantified and qualified information about the real occupation of a building and its users. It would be necessary a system capable to identify both users, places and objects to this goal.

### Location, Communication and Tracking Systems

Another suitable market for the use of tracking systems is the air travel industry, where it is very desirable for economic and security reasons to be able to track passengers within airports. However, the travel industry generally also has a need for passenger location and tracking systems. Other environments where tracking and location are desirable to include casinos, cruise ships, amusement facilities and hospitals. Location, tracking and communication in relation to medical alert systems and security systems is also desirable.

In the case of air travel, it has long been recognized that air travel congestion results in massive revenue loss in airline ground costs through airport terminal delays. One particular area of revenue loss that has not been targeted to date is excessive time spent by passengers in transport terminals.

In particular, recent evidence suggests that airline passengers are becoming increasingly complacent about boarding their aircraft. This is because they know their bags are on board the aircraft and the aircraft cannot depart without them, or without unloading their bags. Unloading bags on a Boeing 747 aircraft, for example, can take up to 60-90 minutes by the time the relevant baggage containers are found and removed.

To the airline, this delay results in costing tens of thousands of dollars. There are also flow-on effects of these delays. These effects are significant, involving loss of flight slots, missing connections for passengers, general network disruption, and aircraft crews having to work (and be paid for) over time.

This problem has not been addressed, and effective methods of reducing the resultant delays have not been identified. Tracking using a transponder which responds to radio frequency Signals has been attempted in the past, but has not been Suitable for practical implementation and use in large Scale environments where there are a large number of individuals or objects that need to be tracked.

### Military market / Security

Recent terrorist threats with means of using shipments as a way to deliver life-threatening explosives have created concern for how a container can be shipped, and what the status of its relative contents might be during the shipment process. A supplier's container may be stolen and its respective contents may be tampered with along its shipping route. Current methods of tracking these containers and their contents, present many dark zones or areas where traceability is not visible. A need for a more detailed level of accountability is now being required. It is for this reason that a real-time, true transparent method of tracking shipments from suppliers must be established.

These containers are subject to various methods of shipping. Because of this, the container and contents may be subject to different environmental pressures that could jeopardize or spoil the status of the shipment. Therefore, the contents, in some instances, may require a method of monitoring their temperature and exposures to the elements.

When the items are shipped in the air by plane they may also have to abide by certain regulations such as those determined by the FAA (Federal Aviation Administration) including, but not limited to the tracking device powering down so that it does not attempt to send/receive signal transmission on its own or without proper protocol. In this instance, the tracking device can use the altimeter sensor or barometric pressure portion of the device to signal the unit to enter into a dormant mode. Another method is to communicate directly through the air plane's wireless relay system, such as an onboard Wi-Fi router such as Gogo(R) Inflight Internet Wi-Fi service used to communicate the container's position and its overall status.

Another problem is excessive shipping. With the use of a real-time location tracking system, the inventory managers of the suppliers can use a system called "Radial Replenishment where only inventory closest to the order's point of final destination is used to fulfill the order. By incorporating this method of inventory management, Suppliers will spend less money on shipping, less resources will be exhausted, and less emissions from vehicles or airplanes will be expelled into the atmosphere. Another problem is theft of the containers between the point of shipping origin and the final destination. Once the container is delivered to a shipping port and someone accepts shipment to forward to its next transient point, the container becomes the property and responsibility of the port authority.

This creates a higher level of liability. There have also been instances of theft within the shipping ports. In some instances, the containers have been shipped to the incorrect warehouse and this has not been discovered until the day delivery is expected. This shipping error will again result in postponement of the delivery and incur related expenses.

Therefore, what is needed in the art is a tracking device and system for tracking these containers and their respective contents from origination to the point of scheduled destination. This would enable the supplier's field representative to locate and monitor the container from the time it has left the point of origin until it arrived at the scheduled destination. The system is also capable of ordering additional Supplies and billing for the use of the Supplies and equipment.

### IOT & CLOUD

Even though the loT and Cloud are two different domains that have evolved rapidly and independently of each other, their characteristics are often complementary. Generally, to obtain advantages in specific application scenarios, complementarity characteristics are the main reason cited by many researchers in integrating the loT and Cloud.

To manage things more dynamically and distribute them in the loT-Cloud, the scope of cloud computing must be extended by introducing the middle layer to reduce the complexity of the cloud. In the multi-cloud environment, new challenges have emerged with regard to the collection, processing, and transmission of information.

loT devices do not allow the processing of complex data on site due to the limitations of energy and processing resources. Generally, collected data are transmitted to the nodes of the upper layer, which has more computational resources and the ability to aggregate and process collected data. However, scalability and low latency are difficult to achieve without the proper infrastructure. For the real-time analysis of data, sensor-centric applications, energy efficiency, complex event management, and scalability, the architecture must be properly designed.

Currently, Software Defined Networking (SDN) has become one of the most attractive technologies in network research. It involves the separation of the data plane and the control plane, and the programmability of the network.

### Tags and taggants

Counterfeiting has been a problem for many years in today's society and lately, it has been increasing at an alarming rate. Different types of products ranging from pharmaceuticals, auto and airplane parts and all the way to apparel goods are counterfeited on daily basis. Knock-off versions of real products that are being sold on the markets are at a much lower quality impacting the health and security of the public. Many anti counterfeit devices have been designed and are available in the market, but none of them are completely successful in stopping counterfeiting. The reason is because these types of security taggants can be easily replicated by the counterfeiters, thus defeating the purpose of integrating an anticounterfeit tag into the authentic product.

These types of anticounterfeit taggants have to be constantly changed to stay one step ahead of counterfeiters. Consequently, there is a vital need for a robust multi-layered anti counterfeit/security taggant. This invention describes an anticounterfeit taggant that is not economically feasible for the counterfeiters to replicate and at the same time it provides multi-level security.

### Wireless Optical Communication (WOC) Technologies

Many research groups and industries are very active in the field of Wireless Optical Communication. They demonstrated a wireless link of this type with a field of view that provides practical coverage in an indoor environment. Recently, it has been demonstrated the coexistence between Li-Fi and Wi-Fi towards 5G.

### OBJECT OF THE INVENTION

It is an object of the present invention to provide a Real Time Tracking System and methods to improve the Identification, Localization, Communication and Traceability (ILCT) of things and people based on Wireless Optical Communication technology.

An alternative object of the invention is to provide an improved alternative for the existing Real Time Location Systems. Based on the information provided by the system, and based on the analysis, optimization and/or management of the data provided by the system, strategies and/or rules associated with the activity or associated business can be defined. This allows achieving new business scenarios, greater economic savings, more security, an improvement in the quality of the location services offered, a personalization, security and fulfillment of process and procedures, etc.

It is also an object of the invention to provide an improved solution to achieve the optimization of entities management, the identification of entities in environments or access scenarios, the definition of scenarios with various ILCT actors, and the coordination of correct and complete compliance with procedures and task flows between them, assistance and help for tasks based on position, identification, the adaptation of the environments to temporary or environmental circumstances, the fulfillment of notifications and communications, the consistency of the objects identified in an environment, etc.

It is also an object of the invention to provide a clear description of an efficient hybrid cloud architecture (PaaS) as a tracking-centric wireless optical communication loT network. To address such issues as reduce latency delay, bandwidth cost, etc., an SDN-based local cloud architecture enabled with wireless optical communication is proposed, as well as a Platform as a Service infrastructure to build new Real Time Location Systems.

It is also an object of the invention to provide samples of real world scenarios where our proposal improves the solutions offered by alternative RFID solutions and competitors.

An alternative object of the invention is to provide a useful alternative to or choice over, existing tracking systems.

### SUMMARY OF THE INVENTION

Disclosed is a system and methods for building a Real Time Tracking System by using wireless optical communication to perform indoor and outdoor location and identification, location, communication and tracking of things and people.

Through the use of a system and method configured as set forth herein, the position of any appropriately marked person or item may be found indoors or outdoors using data interconnected ILCT modules that communicate with one another via a shared local network. A receiver tag or badge attached to the person or item to be tracked is excited by incident infrared radiation from a plurality of WOC modules and transmits back to a processor the data it received so that the processor is able determine the tag's or badge's physical position with respect to the individual ILCT modules. The system and method set forth herein use wireless optical communication to accomplish track at little (not significantly) more than the cost of traditional LED/photoreceptors lighting retrofit or installation. This technology is well suited for secure environments, in which RF leakage cannot be tolerated.

The system and method set forth herein perform comprehensive any kind of tracking activity using wireless optical communication technology. The technology involves the use of a Light Emitting Diode (LED) and photoreceptors designed to be integrated into ILCT modules for the purpose of tracking activities when combined with a tag carried by each individual or item being tracked. Each ILCT has an inter-module communication channel, enabling each module to communicate with a neighboring module, forming a mesh. The system is configured to serially transmit unique identification codes from the network of ILCT modules using time division multiplexing (TDM), which is considerably less costly to implement than previously known indoor positioning systems or tracking systems, using low cost LED's while enabling high-density distribution to improve accuracy. The tag carried by each occupant detects the unique IDs of a plurality of transmitting modules, which data may be used to calculate its relative position. This information is transmit-ted to a processor or controller, which accurately determines the position of the tag.

In accordance with further aspects of an embodiment of the invention, is considered the use of various types of nano/micro/bulk particles may be incorporated in various ways into a matrix to form the taggant. The taggant can be designed in such a way that the various structures in the matrix may or may not be detectable by the human eye. A plurality of different classes of materials.

In accordance with further aspects of an embodiment of the invention, optical lithography can be used to produce the patterns defining the information stored into a taggant signature. Nano-based printing is a digital printing process based on nanotechnology.

Accordingly, the present invention is directed to obtain an ILCT infrastructure and Wireless Optical Smart (WOS) taggants and a real time location system configured to provide solutions for problems described in the background section of this document, and therefore it is an object of the invention to provide ILCT infrastructures and WOS taggants configured to enable an accurate position tracking using an RTLS, both indoor or outdoor, and to generate a tag driving power according to movement of an object by installing a wireless optical element to the tags and tag devices, and a real time location system using the same.

Additional advantages, aspects, and features of the invention will be set forth in part in the description which follows and in part will become apparent to those having ordinary skill in the art upon examination of the following or may be learned from practice of the invention.

### BRIEF DESCRIPTION OF THE DRAWINGS

The numerous advantages of the present invention may be better understood by those skilled in the art by reference to the accompanying drawings in which:
FIG. 1 is a schematic view of an indoor/outdoor wireless optical communication (WOC) system for the Identification, Localization, Communication and Traceability (ILCT) of things and/or people in accordance with certain aspects of an embodiment of the invention.
FIG. 2(a) is a schematic view of a basic ILCT infrastructure for use with the system of FIG. 1 according to certain aspects of an embodiment of the invention.
FIG. 3(a) is a view of hardware components underlying an ILCT module in accordance with certain aspects of an embodiment of the invention.
FIG. 3(b) is a side view of the communication schema between two ILCT modules of FIG. 3(a).
FIG. 4(a) is a schematic view of the structure and the hardware components of the simplest ILCT transmitter module (one LED) for use with the system of FIG. 2(b) according to certain aspects of an embodiment of the invention.
FIG. 4(b) is a schematic view of the FIG. 4(a) for the case of an array of LEDs.
FIG. 5(a) is a schematic view of the structure and hardware components of the simplest ILCT reader module (one photoreceptor) for use with the system of FIG. 2(b) according to certain aspects of an embodiment of the invention.
FIG. 5(b) is a schematic view of the FIG. 5(a) for the case of an array of photoreceptors.
FIG. 6 is a schematic view of a ILCT label and ILCT taggant for use with the system of FIG. 1 according to certain aspects of an embodiment of the invention.
FIG. 7 is a schematic view of an ILCT taggant structure and taggant codification for use with the FIG. 2(a) in accordance with certain aspects of an embodiment of the invention.
FIG. 8 is a schematic view of an hybrid cloud architecture for the ILCT system for use with the system of FIG. 1 according to certain aspects of an embodiment of the invention.
FIG. 9 is a schematic view of three execution models in an ILCT system for use with the FIG. 8 in accordance with certain aspects of an embodiment of the invention.
FIG. 10 is a schematic view of the communication between two ILCT infrastructures via a local cloud for use with the FIG. 8 in accordance with certain aspects of an embodiment of the invention.
FIG. 11 represents an exemplary sequential diagram for the execution PKI evaluation for use with the FIG. 9 in accordance with certain aspects of an embodiment of the invention.
FIG. 12 represents an exemplary sequential diagram for the execution models for use with the FIG. 9 in accordance with certain aspects of an embodiment of the invention.
FIG. 13 is a schematic view of multiple directions and parallel detection of taggants for use with the system of FIG. 1 according to certain aspects of an embodiment of the invention.
FIG. 14 represents an exemplary use of the invention in a supply chain scenario, with multiple paths and checkpoints of assets tracking for use with the system of FIG. 1 according to certain aspects of an embodiment of the invention.
FIG. 15(a) represents an exemplary use of the invention for the case of a kind of assembly line, with an ILCT module in motion and taggants connected to sensors, for use with the system of FIG. 1 according to certain aspects of an embodiment of the invention.
FIG. 15(b) represents an exemplary use of the invention in a luggage conveyor belt scenario, with multiple exits connected with checkpoints of tracking for use with the system of FIG. 1 according to certain aspects of an embodiment of the invention.
FIG 16 represents an exemplary use of the invention as a motion capture technology for sports performance analysis for use with the system of FIG. 1 according to certain aspects of an embodiment of the invention.

### DETAILED DESCRIPTION OF THE PREFERRED EMBODIMENTS

The following description is of a particular embodiment of the invention, set out to enable one to practice an implementation of the invention, and is not intended to limit the preferred embodiment, but to serve as a particular example thereof. Those skilled in the art should appreciate that they may readily use the conception and specific embodiments disclosed as a basis for modifying or designing other methods and systems for carrying out the same purposes of the present invention. Those skilled in the art should also realize that such equivalent assemblies do not depart from the spirit and scope of the invention in its broadest form.

Disclosed herein are systems and methods for providing identification, location, communication and tracking of things and people through ILCT modules using wireless optical communication that transmit infrared radiation to a smart optical wireless taggant that causes another infrared radiation back to the module ILCT with the signature information enclosed into the taggant.

### ILCT module and wireless optical smart tags

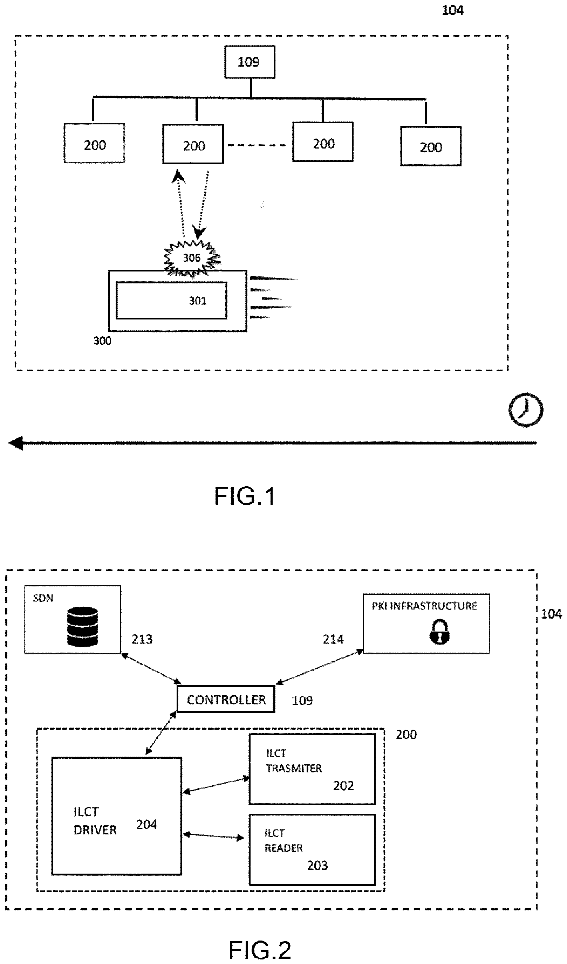

As shown in FIG 1, the base of the present invention is the concept of ILCT infrastructure 104 with the interconnection of ILCT 200 modules, which share a common communication and processing infrastructure. At the other end, wireless optical smart tags 300 encode information in a taggant 301. All ILCT module is defined by a unique identifier and situated in an identified location.

As shown in FIG 2. a stand-alone configuration of the invention (not including any cloud computing feature) requires an ILCT infrastructure 104 that includes an information and storage management system (SDN) 213, a digital certification infrastructure PKI 214 and a module Controller 109, in charge of coordinating all the activities with the ILCT modules 200 and the communication with the network All the modules belonging to the same ILCT infrastructure 104 share a common infrastructure.

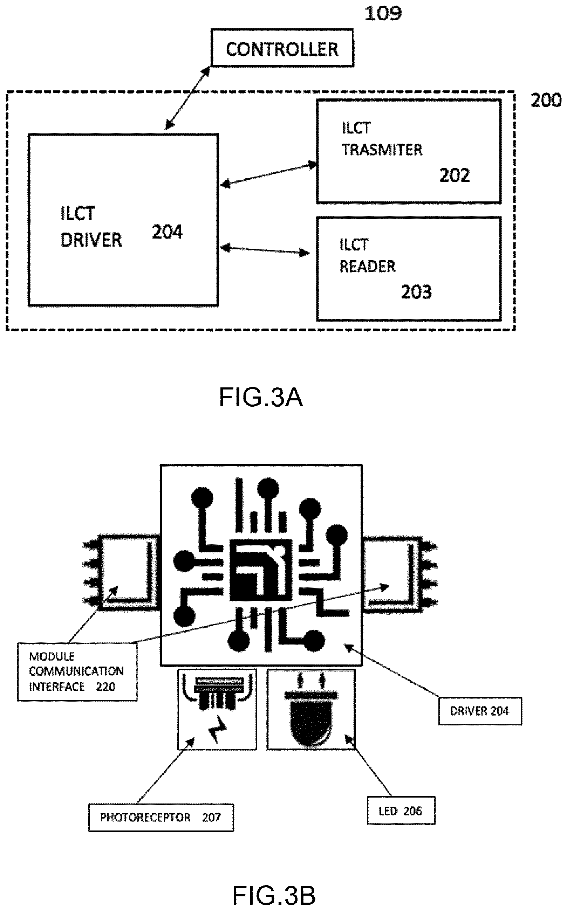

As shown in FIG 3a, each ILCT module has an ILCT transmitter module 202, configured to provide incident infrared radiation, an ILCT reader module 203, configure to receive an incident infrared radiation and an ILCT driver module 204, configured to control the conversion to LED communication and coordination of transmitter and reader modules, and communication to/from the ILCT Controller 109 of ILCT infrastructure. FIG 3b. shows a schematic view of hardware supporting the ILCT module, which main components are LEDs 206, photoreceptor 207, driver board 204 and communication module 220.

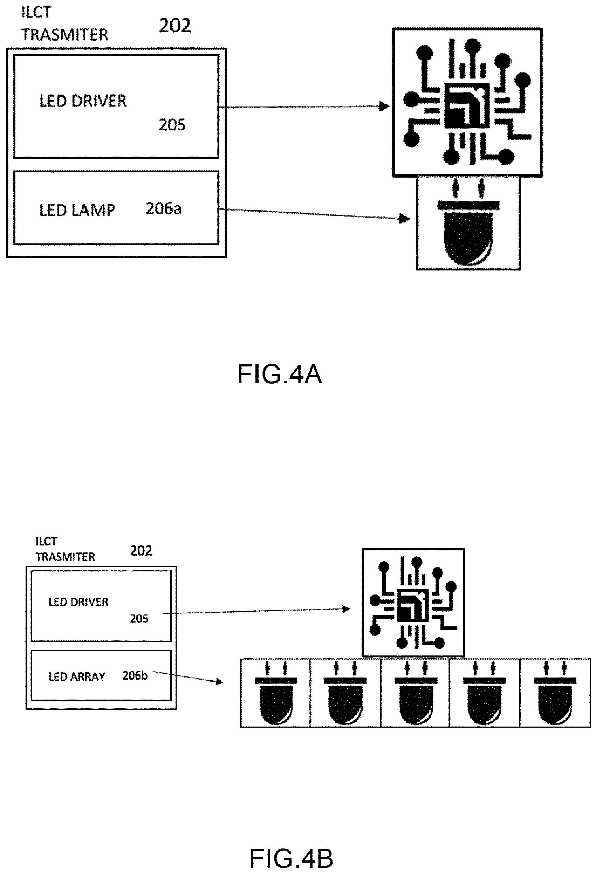

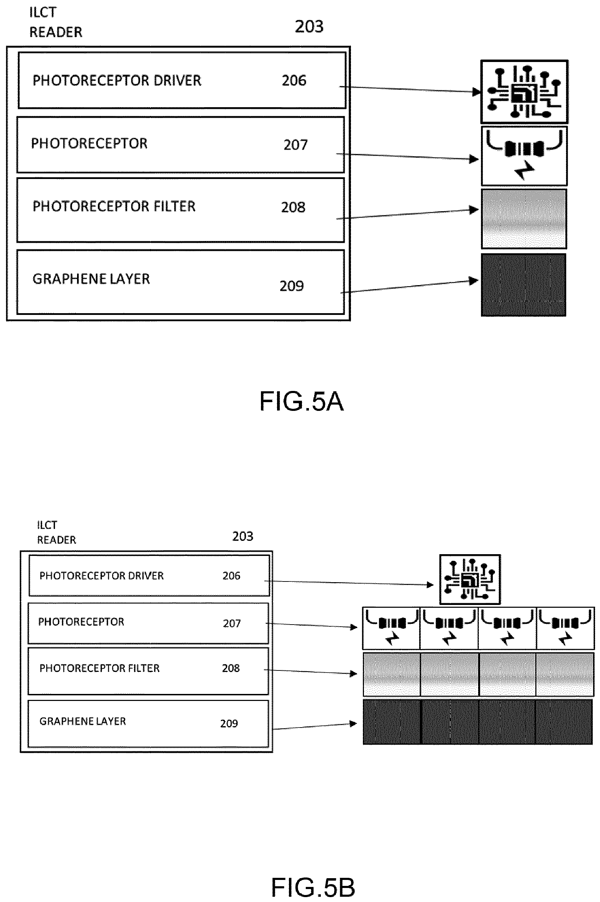

In FIG. 4(a) is shown a schematic view of components for the case of a simple ILCT transmitter module 202, which includes a LED driver 205 and a LED lamp 206(a). FIG. 4(b) shows the schematic view for the case of the ILCT transmitter incorporates an array of LEDs 206(b). On the other hand, FIG. 5(a) shows a schematic view of the components included in a ILCT reader module 203, with the photoreceptor driver 206, the photoreceptor 205, the radiation filter 208 and the graphene layer 209. FIG. 5b describes the structure of a ILCT reader for the case of multiple photoreceptors.

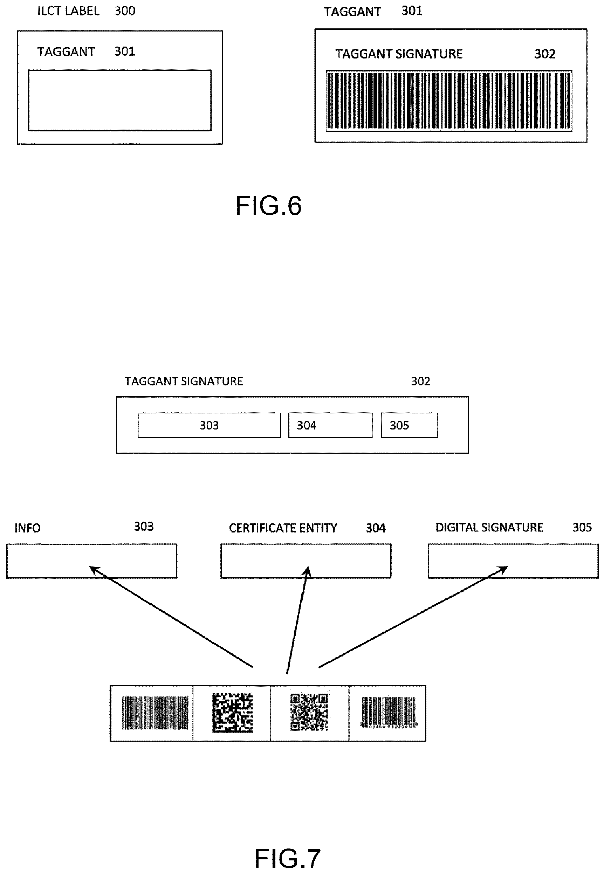

In FIG. 6 is shown the structure of ILCT Label (or Tag) 300, including a taggant 301 capable of representing a signature or information 302. A wide variety of nanomaterials, micromaterials and bulk materials that are all integrated into a taggant to provide the taggant with optical and/or electrical properties.

As shown in FIG 7. as a type of anti counterfeit strategy, the information included in the signature of a taggant is digitally signed. The structure of the taggant signature incorporates at least three fields: information that identifies tag 303, information about the certificate entity 304 and the digital signature associated.

The size of the taggant may be varied and customized for a particular product that the multi-layered complex nano-tag is applied to. In one embodiment, combinations of different types of nano/micro/bulk particles can be embedded onto or into a thin polymer layer. The polymer layer may have an adhesive backing to allow for fast and easy application to a wide variety of products. In another embodiment, the combinations of different types of nano/micro/bulk particles may be incorporated into an "ink" that is deposition or sprayed onto a product. The taggant can be designed to be more complex by adding to the number of different types of nano/ micro/bulk structures.

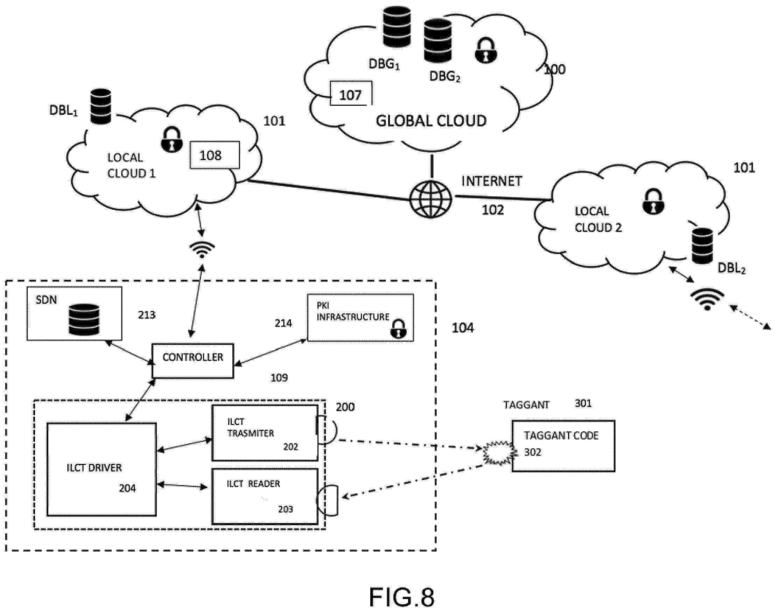

Figure 8 shows a snapshot of the architecture of a Real Time Tracking System, as well as the main components of a Platform as a Service for tracking based on wireless optical communication. The proposed architecture is grouped into three different layers: public cloud 100, private cloud 101, and infrastructure layer 104. The public cloud layer is traditional cloud computing, which is used to provide long-term pattern recognition, massive data analysis, large-scale event detection, and so on. Here, the local cloud node is considered a private cloud in the private cloud layer that is deployed at the edge of the network; and the ILCT infrastructure layer is the physical layer which consists of data producers and consumers (i.e.. ILCT modules and ILCT taggants).

The status of each component in an ILCT infrastructure is represented as a virtual node (or avatar), either in the local ILCT infrastructure or in a remote information system sited in the private or/and public cloud. This representation includes the information for each ILCT module and the logic/strategy applied for tag detection. This way, both local management and/or remote management of the Real-Time Tracking System are simultaneously possible.

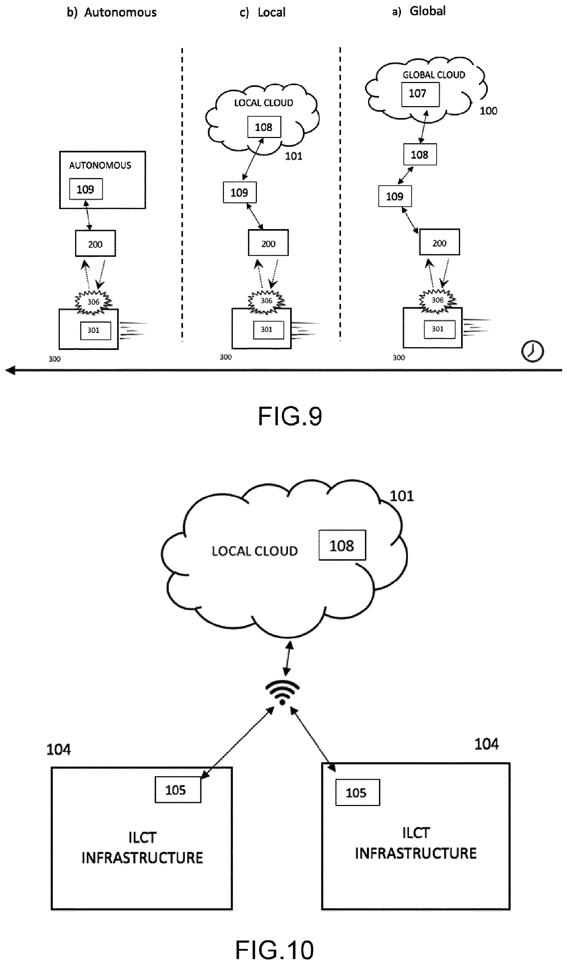

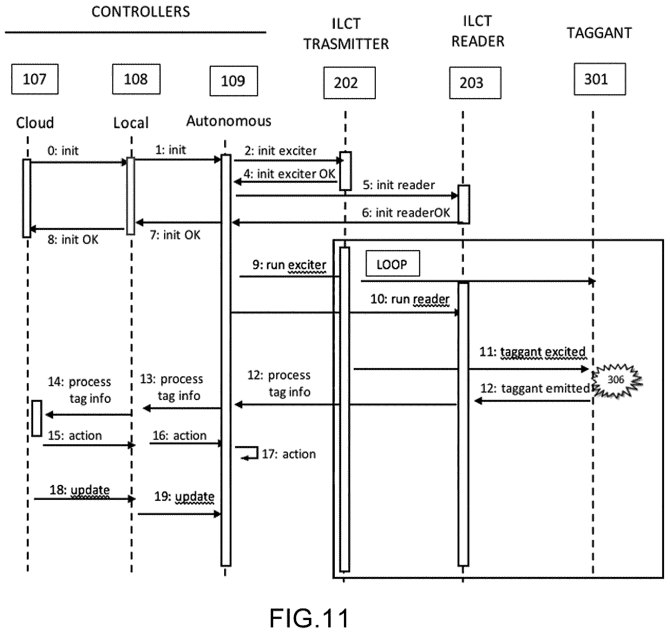

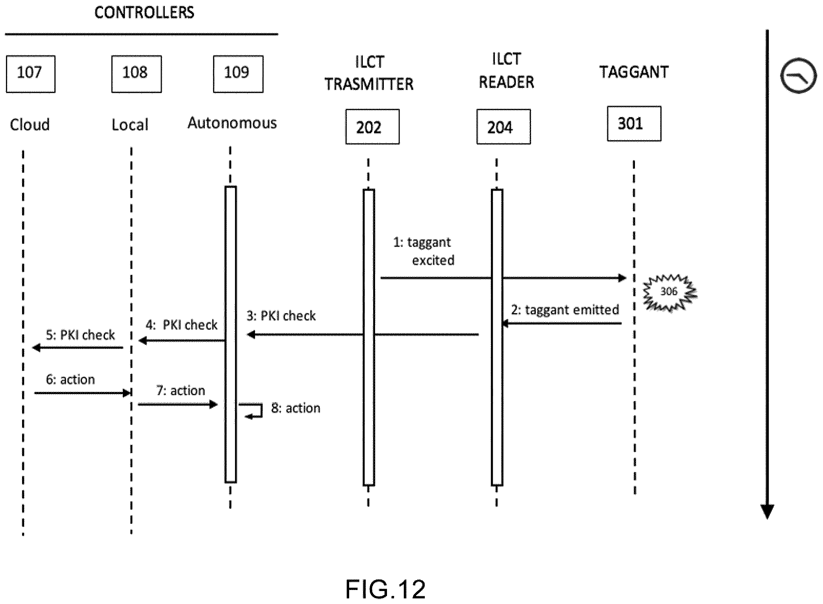

Fig 9 shows the 3 different execution modes of the system, according to place the management of the information and the execution logic are executed: a) autonomous, b) in the private cloud or c) in the public cloud. In FIG. 11 is shown a sequential diagram of each execution models and indicating the relationships/dependencies between the different controllers (cloud, local and autonomous) and how their actions relate to the components of the physical infrastructure layer. Likewise, in FIG. 12 is shown how the digital signature verification is carried out by the different layers of the system.

The improvements provided by our proposal, both in costs and added functionalities, make our system much more versatile and powerful than those systems currently available. Our system is able to operate in already known scenarios, where RFID-based solutions are usually applied, but it can give a solution to new ones too. Below, some representative scenarios of usage are shown.

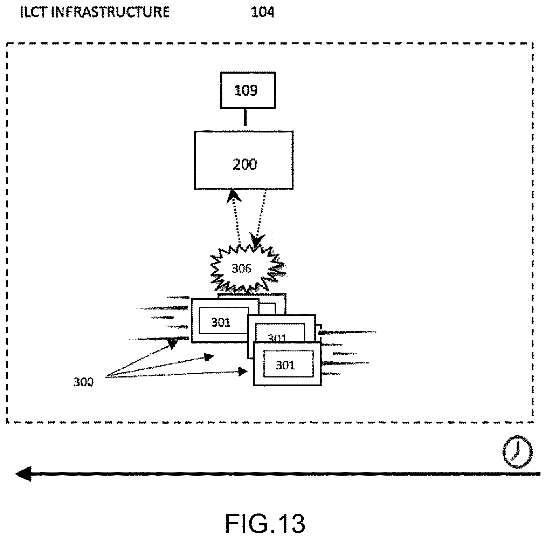

FIG 13 shows the case of multiple simultaneous detections with labels moving in different directions.

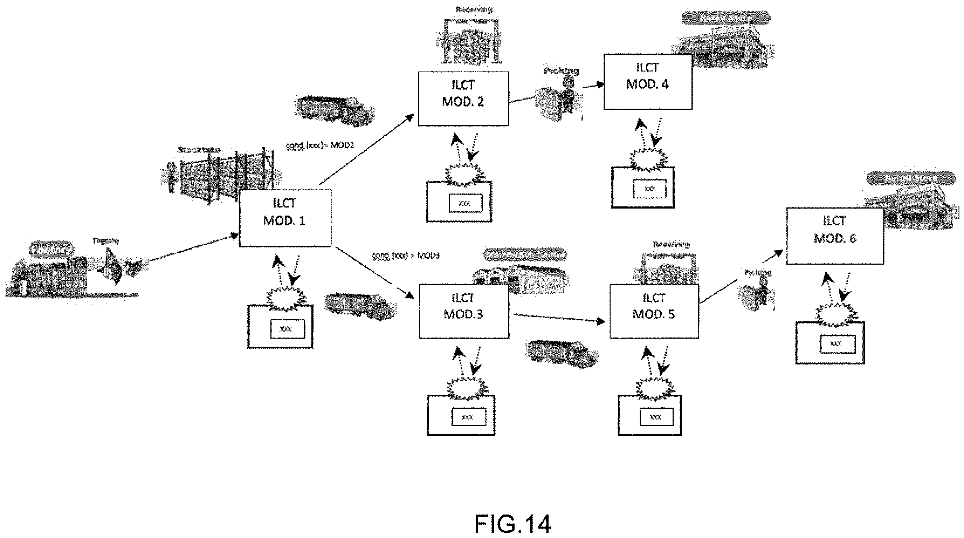

FIG 14 shows a classic supply chain scenario, where the monitoring can be carried out the whole time along the different stages of the supply chain.

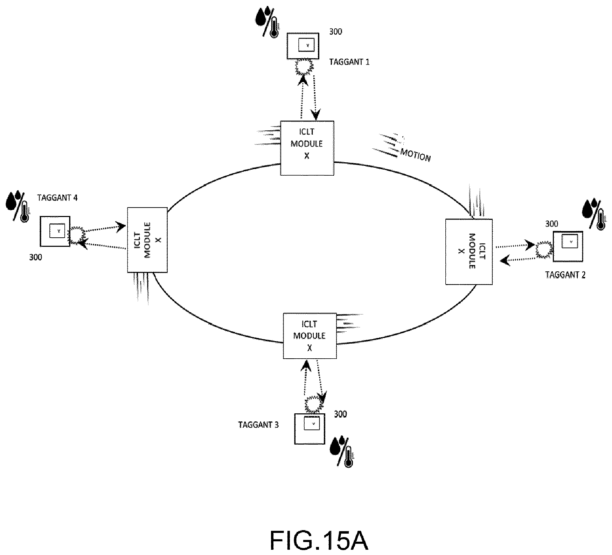

In Fig 15a is shown a case of static tags connected to sensors where the ILCT modules are in motion.

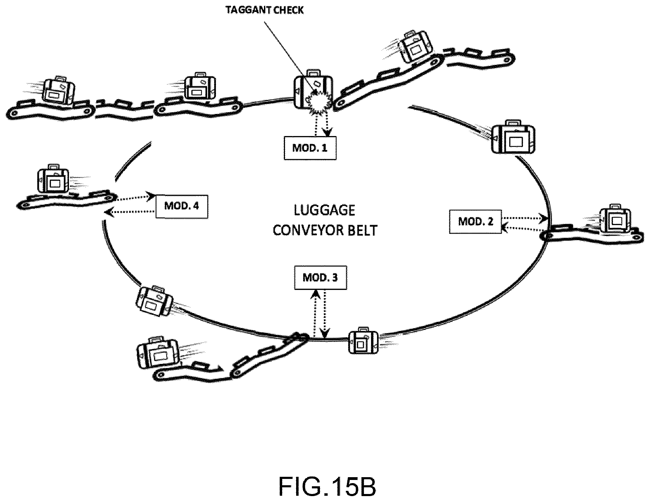

FIG 15b shows the case of a baggage transport belt in airports. The proposed system provides real-time non-stop tracking during all the stages of baggage management processes.

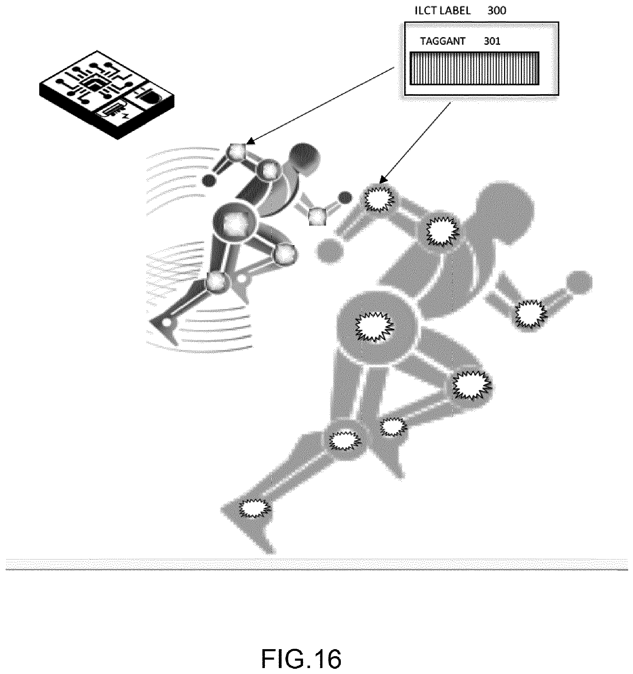

Figure 16 shows the use of our proposal for motion capture, which may allow performing performance analysis.

## Claims

1. A Real Time Tracking System based on wireless optical communication technology to detect the Identification, Localization, Communication and Traceability (hereinafter ILCT) of things and/or people, comprising:
• a wireless optical communication (WOC) system that contain an ILCT infrastructure, a WOS taggant incorporated in or onto labels or documents and hybrid cloud architecture as a Platform as a Service to construct real time tracking system.
• The said ILCT infrastructure is comprising of a plurality of connected ILCT modules, a PKI infrastructure, a Software Defined Networking (hereinafter SDN) and a Controller. The said ILCT modules each having a transmitter module, a reader/receiver module and a driver module;

2. The system of claim 1, wherein said ILCT infrastructure instead of one unique ILCT module comprises an array of identified interconnected ILCT modules in an autonomous execution system;

3. The system of claim 1, wherein said ILCT infrastructure comprises an array of identified interconnected ILCT modules in an autonomous execution system;

4. The system of claim 2, wherein there is a local private cloud architecture giving support to an ILCT infrastructure. All the ILCT modules belonging to the same infrastructure communicate to/from the linked private local cloud through an access point managed by the Controller;

5. The system of claim 4, wherein there is a public cloud layer used to provide long-term pattern recognition, massive data analysis, large-scale event detection, and so on as a PaaS to support any kind of Real Time Tracking System 107;

6. The system of claim 5, wherein said wireless optical tracking communication (WOTC) system and methods contains the following hardware components: ILCT infrastructure, ILCT module, infrastructure, a Software Defined Networking (hereinafter SDN) and a central Controller, and of wireless optical smart. Likewise, the system of claim 5 contains a Platform as a Service (PaaS;

7. The system of claim 3, wherein there is a public cloud layer comprises an array of identified interconnected ILCT modules;

8. The system of claim 1, wherein said ILCT modules are adaptable to static and mobile scenarios;

9. The system of claim 1, wherein said ILCT infrastructure of modules are adaptable to both a wireless or a wire/fixed infrastructure;

10. The system of claim 1, wherein said taggant has linked optical communication sensor. These wireless sensor ILCT taggants are used for remote, automatic measurements, detecting changes in moisture, temperature, pressure and more;

11. The system of claim 1, wherein said two or more infrastructures of modules communicate each other via a local cloud;

12. The system of claim 1, wherein said two or more infrastructures of modules linked to different local cloud communicate with each other via the global public cloud;

13. The system of claim 1, wherein said the ILCT driver in a module are statically or dynamically reconfigured. The values configuring the infrared frequency used by the emitter, the photoreceptor filter managed by the reader and the PKI infrastructure configuration data change by demand;

14. A method for detecting, in an autonomous configuration, the identification, location, communication and tracking of multiple WOS taggant, comprising the steps of:
• providing an ILCT infrastructure with ILCT modules, a PKI infrastructure, a Software Defined Networking (hereinafter SDN) and a Controller.
• providing each ILCT module with a transmitter module, a reader module and a driver module.
• wherein each said ILCT infrastructure has a controller having computer executable code stored thereon configured to receive data from said a driver module in a ILCT module representative of determined the ILCT module identification codes such that said WOS taggant receiver and one or more of said ILCT modules carry on two-way communication, and to determine a physical location of said WOS taggant based on said data representative of determined ILCT module identification codes and data representative of a physical location of said plurality of ILCT modules.
• transmitting IR light communication data signals from said plurality of ILCT modules.
• receiving at least a first one of the said processors a data transmission from said WOS taggant comprising ILCT identification codes received by said WOS taggant from said ILCT modules.
• determining at said first one of said processors a physical location of said WOS taggant;

15. A method for detecting, in an local or global configuration, the identification, location, communication and tracking of multiple WOS taggant, comprising the steps of:
• providing an ILCT infrastructure with ILCT modules, a PKI infrastructure, a Software Defined Networking (hereinafter SDN) and a Controller.
• providing each ILCT module with a transmitter module, a reader module and a driver module.
• wherein each said ILCT infrastructure has a controller having computer executable code stored thereon configured to receive data from said a driver module in a ILCT module representative of determined the ILCT module identification codes such that said WOS taggant receiver and one or more of said ILCT modules carry on two-way communication, and to determine a physical location of said WOS taggant based on said data representative of determined ILCT module identification codes and data representative of a physical location of said plurality of ILCT modules.
• transmitting IR light communication data signals from said plurality of ILCT modules.
• receiving at least a first one of the said processors a data transmission from said WOS taggant comprising ILCT identification codes received by said WOS taggant from said ILCT modules.
• determining at said first one of said processors a physical location of said WOS taggant;

16. The system of claim 1, wherein said Wireless Optical Smart taggant uses a known barcode representation (linear or matrix) in the taggant signature;

17. The system of claim 1, wherein said Wireless Optical Smart taggant is micro tagging (greater than 5 mm wide), or nano tagging (0,3 mm to 5 mm wide);

18. The system of claim 1, wherein said transmitter module in an ILCT module is be configured to provide infrared radiation in a different wavelength range. Likewise, wherein said reader module in an ILCT module is configured to receive and infrared radiation in a different wavelength range;

19. The system of claim 1, wherein said WAS taggant is embedded onto or into a thin polymer layer or incorporated into an ink. In the second case, WAS tags or labels are generated by a printer of taggants.
